(19) Europäisches Patentamt
European Patent Office
Office européen des brevets

(11) EP 1 577 348 B1

(12) **EUROPEAN PATENT SPECIFICATION**

(45) Date of publication and mention of the grant of the patent:
**23.12.2009 Bulletin 2009/52**

(21) Application number: **03768213.5**

(22) Date of filing: **25.12.2003**

(51) Int Cl.:
***C08G 73/10*** *(2006.01)* ***C09D 179/08*** *(2006.01)*

(86) International application number:
**PCT/JP2003/016678**

(87) International publication number:
**WO 2004/061001 (22.07.2004 Gazette 2004/30)**

(54) **POLYIMIDE PRECURSOR LIQUID COMPOSITION AND POLYIMIDE COATING FILM**

FLÜSSIGE POLYIMIDVORLÄUFERZUSAMMENSETZUNG UND POLYIMIDBESCHICHTUNG

COMPOSITION DE LIQUIDE PRECURSEUR DE POLYIMIDE ET FILM DE REVETEMENT EN POLYIMIDE

(84) Designated Contracting States:
**DE FR GB IT NL**

(30) Priority: **27.12.2002 JP 2002381995**
**15.05.2003 JP 2003137591**

(43) Date of publication of application:
**21.09.2005 Bulletin 2005/38**

(73) Proprietor: **I.S.T Corporation**
**Otsu-shi**
**Shiga 520-2153 (JP)**

(72) Inventors:
- **MORIUCHI, Koji**
**c/o I.S.T CORPORATION**
**Otsu-shi, Shiga 520-2153 (JP)**
- **YONEMUSHI, Harumi**
**Otsu-shi, Shiga 520-2153 (JP)**
- **KIKUCHI, Masahiko**
**Otsu-shi, Shiga 520-2153 (JP)**
- **UWABA, Satomi**
**Otsu-shi, Shiga 520-2153 (JP)**

(74) Representative: **Schwarzensteiner, Marie-Luise et al**
**Grape & Schwarzensteiner**
**Patentanwälte**
**Sebastiansplatz 7**
**80331 München (DE)**

(56) References cited:
**JP-A- 6 207 014** **JP-A- 2000 226 517**
**JP-A- 2000 305 280**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to polyimide precursors that are essentially colorless and transparent, and to polyimide coating films (including films, sheets and tubes). More specifically, the present invention relates to polyimide coating films that are essentially colorless and transparent, which are useful in optic fibers, substrates for liquid crystal display faces, electroluminescence substrates and protective sheets, for example, and to polyimide films and the like that are substantially colorless and transparent and that are useful as heat resistant coating films.

### Background Art

Polyimide coatings and films are used widely in many various product applications where thermal stability and favorable electrical and mechanical properties are necessary and considered to be desirable. In addition, polyimide coatings and films that have favorable transparent properties have been used over a wide range of uses as films in liquid crystal display devices, electroluminescence substrates, fiber-optic cable covering films, wave guiding tubes and protective covering films for solar cells, for example. Although such polyimide coverings and films have favorable transparency, it is common that they discolor to yellow or brown as a result of undergoing the extreme thermal conditions experienced during film formation. There have been problems with this discoloration in applications such as liquid crystal films in which the discoloration darkens the field of view and the functionality of liquid crystal display apparatuses is lost.

In response to the aforementioned problems, various polyimide coatings and films that show a low degree of discoloration and high transparency have been developed. The development of coatings and films with such pre-existing technology has been guided by one train of research focusing on factors involved in the discoloration of transparent polyimide films. This research has reported that discoloration of polyimides is very dependent on the type of aromatic tetracarboxylic dianhydride and diamino compound that are selected for use as the polyimide starting material. In particular, aromatic diamine containing an amino group in the meta position is particularly effective as an amino compound, and this research has proposed that a mixture of this diamine compound and biphenyl tetracarboxylic dianhydride can lead to the creation of a colorless transparent polyimide (Patent Reference 1 below). The development of coatings and films with such pre-existing technology has been guided by the well known principal that a higher generation temperature or polymerization temperature leads to detrimental effects regarding the degree of discoloration of the obtained polyimide. Polyimide actually is manufactured in these pre-existing technologies using a method in which aromatic tetracarboxylic dianhydride and a diamino compound are polymerized at a temperature of 80˚C or less to create a polyamic acid solution, after which the polyamic acid is converted to an imide by thermal or chemical means.

However, in Patent Reference 1, because the polyamic acid is polymerized at a temperature of 80˚C or less, there have been problems in that the polymerization speed is low and the production cost is high. In order to solve this problem, in Patent Reference 2 below, Deets has proposed a polyimide whose production cost is low.

Patent Reference 1: US Patent No 4,876,330, column 1 line 64 to column 2 line 6 and column 8 lines 25 to 39.

Patent Reference 2: JP 2000-313804A.

However, in recent years, polyimides having even greater transparency have been demanded, in imaging devices using liquid crystal elements or electroluminescence (EL), for example, in optic fibers, optic wave guides, and electrical components such as protective coating films for solar cells and printed boards.

JP6207014 describes a method for producing a polyimide or its film by imidating a polyamic acid wherein a specified compound having a boiling point higher than that of the tertiary amine used as the imidation catalyst and that of the solvent for the polymerization of the polyamic acid, e.g. anthracene, is incorporated into the polyamic acid, to produce a polyimide and its film having high visible light transmittance and excellent toughness and giving good accuracy in registering by transmitted light.

JP2000305280 describes a developer consisting of 60-80 wt.% bipolar aprotic polar solvent, 10-30 wt.% ester and 10-30 wt.% water. The bipolar aprotic polar solvent is, e.g. N-methylpyrrolidone, N,N-dimethylacetamide, N,N-dimethyl-formamide or N,N-diethylformamide. The ester is e.g. ethylene carbonate, propylene carbonate, ethyl lactate, ethyl pyruvate or propylene glycol monomethyl ether acetate. Thus, a developer for a photosensitive precursor is provided having no danger of ignition in a developing step.

According to JP2000226517, to obtain a black paste having low viscosity in spite of high solid in a polyimide precursor varnish comprises a specific diamine and a carboxylic acid dissolved in an organic solvent and a black pigment. The polyimide precursor varnish is obtained by dissolving the polyimide precursor comprising a diamine and a tetracarboxylic acid its ester, in the organic solvent.

Disclosure of Invention

The present invention improves on the conventional art, and provides a polyimide coating film that has even higher transparency, and a polyimide precursor liquid that is used in the polyimide coating film thereof.

A polyimide precursor liquid composition of the present invention includes at least one type of tetracarboxylic dianhydride or derivative thereof, at least one type of diamine or derivative thereof, and a polar polymerization solvent, wherein the polyimide precursor liquid composition further includes a cyclic compound, and wherein the cyclic compound has a boiling point of 200˚C or more and includes carbon, hydrogen and oxygen atoms.

The polyimide coating film of the present invention is obtained by converting the polyimide precursor liquid composition to an imide.

Brief Description of Drawings

FIG. 1 is the thermal analysis data of BPADA used in Working Examples 1 to 7 of the present invention, as measured by a differential scanning calorimeter (DSC).

FIG. 2 is an O1s spectrograph obtained by XPS analysis of a polyimide obtained in Working Example 1 of the present invention.

FIG. 3 is an O1s spectrograph obtained by XPS analysis of a polyimide obtained in Comparative Example 1.

Best Mode for Carrying Out the Invention

The present invention can provide a polyimide coating film that has even higher transparency than one made by the conventional art by providing a polyimide precursor liquid composition that includes at least one type of tetracarboxylic dianhydride or derivative thereof, at least one type of diamine or derivative thereof, and a polar polymerization solvent, wherein the polyimide precursor liquid composition further includes a cyclic compound, that has a boiling point of 200˚C or more, and includes carbon, hydrogen and oxygen atoms.

Preferable raw material compositions that can be used in the present invention include: at least one type of aromatic tetracarboxylic dianhydride or derivative thereof selected from the group consisting of the following chemical formulae A and B (where X represents - O-, -S -, - SO -, - $SO_2$ -, - $CH_2$ -, - $CF_2$ -, - $C(CH_3)_2$ -, - $C(CF_3)_2$ - or a direct bond); at least one type of aromatic diamine or derivative thereof selected from the group consisting of the following chemical formulae I and II (where Y represents - O -, - S -, - SO -, - $SO_2$ -, - $CH_2$ -, - $CF_2$ -, - $C(CH_3)_2$ -, - $C(CF_3)_2$ -, - CO - or a direct bond); a polar polymerization solvent; and a cyclic compound wherein the cyclic compound has a boiling point of 200˚C or more and includes carbon, hydrogen and oxygen atoms.

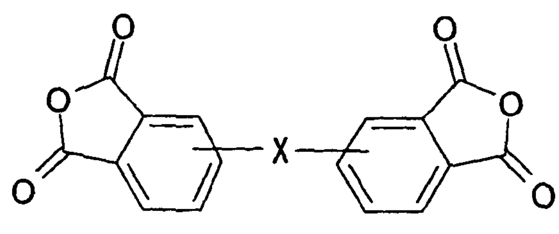

A

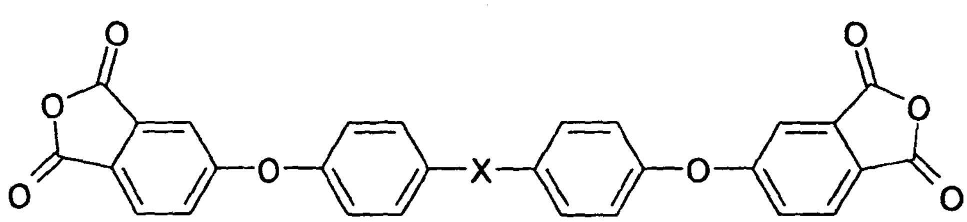

B

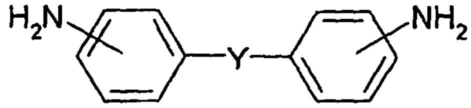

I

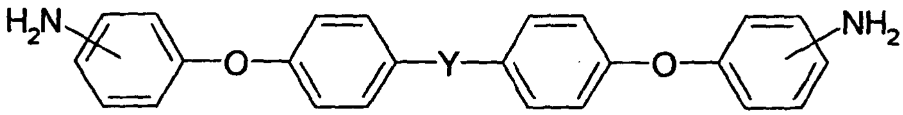

II

Compounds such as N,N-dimethylformamide (DMF), N,N-dimethylacetamide (DMAC), N-methyl-2-pyrrolidone (NMP) and dimethylsulfoxide (DMSO), which are polar polymerization solvents that generally can be used for polymerizing polyamic acid, which is a polyimide precursor, are strongly solvated or form complexes with polyamic acid, which is a polyimide precursor, to attach to the polyamic acid, and they may thermally decompose when fired at 300°C or above. When these solvents thermally decompose, they may be a factor in discoloration because they include, for example, nitrogen (N) and sulfur (S) atoms.

The inventors of the present invention have thoroughly investigated the theory that if a compound that does not include hetero atoms such as nitrogen, phosphorous and sulfur, and that has a boiling point that is higher than a polar organic solvent used as a polymerization solvent, is added to the polar organic solvent as a polyimide precursor, then the compound is substituted with the polar organic solvent, which is a polymerization solvent that has a lower boiling point, and that it may be possible to prevent discoloring when firing at a high temperature. They have found that when a cyclic compound that does not include hetero atoms such as nitrogen, phosphorous and sulfur and that has a high boiling point is used, it is effective in preventing discoloration. In particular, they have found that since compounds that have a five member ring-structure that includes a carbonyl group (C = O bond) have a larger dipole moment and dielectric constant than polar organic solvents that generally are used for polymerizing polyamic acid, and that these compounds strongly solvate with polyamic acid due to the planar structure derived from the five-member ring, these compounds are substituted for the polar organic solvent when they are used, and there is an effect of preventing discoloration when firing at high temperatures.

The dielectric constant of the compound is 30 or more, and is preferably 40 or more. The dipole moment of the compound is 3 debye or more, and is preferably 4 debye or more.

It is preferable that the compound used in the present invention is at least one selected from the group consisting of ethylene carbonate, propylene carbonate, butylene carbonate and γ-butyrolactone.

It is preferable that when the solids portion of the polyimide precursor liquid is 100 mass parts, the polar polymerization solvent is in the range of 150 to 900 mass parts, and the cyclic compound is in the range of 15 to 750 mass parts.

It is preferable that the polyimide precursor is polymerized in the polar polymerization solvent, after which the cyclic compound is added.

It is preferable that when the polyimide coating film of the present invention is a film or coating film that has a thickness of 50 $\pm$ 10 micrometers ($\mu$m) and when irradiated with light of 420 nanometers (nm), the polyimide coating film shows a transmittance of 50% or more. It is more preferable that it shows a transmittance of 60% or more, and it is particularly preferable that it shows a transmittance of 70% or more.

2,2-bis(3,4-dicarboxyphenyl)hexafluoropropane dianhydride, diphenylsulfone tetracarboxylic dianhydride, 2,2-bis(3,4-dicarboxy phenyl)propane dianhydride, diphenylsulfide tetracarboxylic dianhydride, diphenylsulfoxide tetracarboxylic dianhydride, oxydiphthalic dianhydride, biphenyl tetracarboxylic dianhydride and benzophenone tetracarboxylic dianhidride are examples of aromatic tetracarboxylic dianhydride. In a favorable embodiment, X is a fluorine substituted aliphatic hydrocarbon group. In a more favorable embodiment, the aromatic tetracarboxylic dianhydride monomer compound of the present invention is BPADA of Formula 1 below.

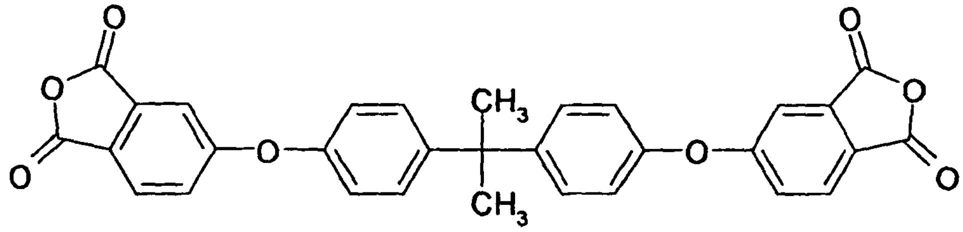

1

In another more favorable embodiment, X is a direct bond, and the aromatic tetracarboxylic dianhydride monomer component is biphenyl tetracarboxylic dianhydride of Formula 2 below, that is to say, BPDA.

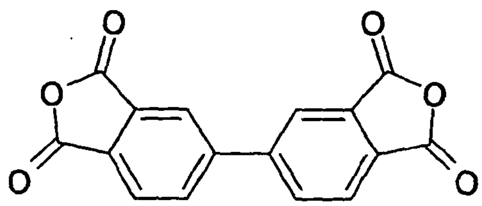

2

Tetracarboxylic acid, carboxylate, and tetracarboxylic dianhydride are examples of tetracarboxylic dianhydride or derivatives thereof, however tetracarboxylic dianhydride is preferable.

The aromatic diamine of the present invention is a substitute aromatic diamine represented by either of the general Formula I or general Formula II. In a preferable embodiment, Y is a sulfone, and the aromatic diamine is bis [substituted-aminophenyl]sulfone(substituted -DDS). In Formula 3 below, this may be either the meta-form or the para-form, however it is preferably the para-form. Benzidine, 4,4'-oxydianiline, 4,4'-diamino diphenylsulfone, 4,4'-diaminodiphenyl sulfide, 4,4'-diaminodiphenyl sulfoxide, 4,4'-methylenedianiline, 4,4'-di-aminodiphenyldifluoromethane, 2,2-bis[4-(4-aminophenoxy)phenyl] propane (BAPP) and bis[4-(4-amino phenoxy)phenyl]sulphone (BAPS) are examples of para-substituted aromatic diamines.

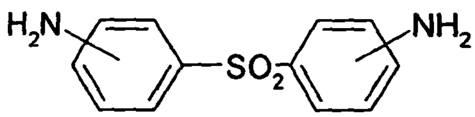

3

Diamine, diisocyanate, and diaminodisilanes are examples of diamines or derivatives thereof, however diamine is preferable.

If using a diamine that includes $SO_2$ functional groups (for example 4,4-DDS) and/or aromatic - O - aromatic ether bonds (such as BAPP or BAPS) when manufacturing the polyamic acid solution of the present invention, then it is preferable to use these with a second diamine monomer for the purpose of diluting the color of the obtained polyimide and/or improving the toughness. It is possible that the second diamine monomer may be either a para- or meta- substituted aromatic diamine, or alicyclic diamine. Bis[4-(3-aminophenoxy)phenyl]sulfone (BAPSM), 1,3-metaphenylenediamine (MPDA), 1,3-bis(3-aminophenoxy) benzene (m-ABP) and 3,4'-oxydianiline (3,4'-ODA) are examples of meta-substituted aromatic diamines. Cyclohexane diamine, isophorone diamine and norbornane diamine are examples of alicyclic diamines.

In the present invention, it is preferable that BPADA, which is the compound in which the X indicated in the chemical formula B is $-(CH_3)_2-$, has a melting point endothermic peak temperature as measured by a differential scanning calorimeter (DSC) of 187°C or more, and is substantially neither endothermic nor exothermic at less than the melting onset endothermic temperature. When such a BPADA is used, it is possible to maintain an even higher transparency.

Furthermore, if the compound shown in chemical formula A is biphenyl tetracarboxylic dianhydride (BPDA, chemical formula 1), then it is preferable that the mixing ratio of BPADA (chemical formula 2) shown in chemical formula B is in the range of BPDA: BPDA = 9:1 to 5:5. If in this range, then it is possible to increase the toughness while maintaining high transparency.

There is a tendency towards increasing costs when alternate functional groups are inserted onto the aromatic

tetracarboxylic dianhydride. In particular, when fluorine is inserted, the manufacturing cost increases significantly. For this reason, the biphenyl tetracarboxylic dianhydride (BPDA) shown in chemical formula 2 is preferred.

In a preferable embodiment, the polyamic acid or the coating film solution of the present invention is manufactured by reacting or polymerizing the above noted aromatic tetracarboxylic anhydride (also known as a bifunctional acid anhydride) component and the aromatic diamine monomer component in a polar organic solvent at a temperature of less than 90˚C in an inert atmosphere. The reaction time is six hours or greater.

When manufacturing the polyamic acid or the coating film solution, as much as possible, it is preferable to react the bifunctional acid anhydride component and the diamine monomer component at an equimolar ratio to increase the degree of polymerization. Therefore, it is preferable to maintain the molar ratio of bifunctional acid anhydride / diamine in a range of 0.9 to 1.1 / 1.0, and 1.00 to 1.04 / 1.0 is further preferable. The molecular weight of the polyamic acid in the polyamic acid solution of the present invention preferably is 5,000 to 500,000, and more preferably is 15,000 to 100,000.

Examples of the polar organic solvent useful in the present invention include N,N-dimethylformamide, N,N-dimethylacetamide, N,N-diethylacetamide, N-methyl-2-pyrrolidone, 1,3-dimethyl-2-imidazolidinone, N-methylcaprolactum, hexamethylphosphoric triamide, 1,2-dimethoxyethane, diglyme, triglyme, tetrahydrofuran, 1,4-dioxane, γ-butyrolactone, dimethyl carbonate, diethyl carbonate, ethylene carbonate, propylene carbonate, diethoxyethane, dimethysulfoxide and sulfolane. A preferable solvent is N,N-dimethylacetamide (DMAC). These solvents may be used independently or in a mixture, or mixed with alternative solvents such as toluene and xylene, that is to say, other aromatic hydrocarbons.

In addition to the bifunctional acid anhydride component and the diamine monomer component, it is also possible that the reaction mixture may contain additives such as processing aids or flow aids (such as Modaflow (registered trademark) flow aid), anti-oxidants, dyes, inorganic pigments (for example, titanium dioxide $TiO_2$) and fillers (such as polytetrafluoroethylene and fluorinated ethylene / propylene co-polymer) that does not detrimentally affect the transparency and the yellowness index characteristics of the polyimide coating or film.

In order to facilitate the handling of the polyamic acid solution, the concentration of the polyamic acid in the solution is in the range of 10 to 30 wt %, and is preferably 20 to 25 wt%, and the viscosity of the solution is preferably in the range of about 1 to 5000 poise.

It is possible to cast or coat the polyamic acid solution onto optically useful items when the polyamic acid solution is manufactured. Liquid crystal displays, electroluminescence, fiber optic cables, wave guide tubes, solar cells, and transparent fixing films that allow a part of light of the absorption wavelength of the toner of an electronic photographing device, which is disclosed in JP 2003-5548A, to pass, or transparent ring supporting members of a photosensitive body that is used in a method for recording images of an electronic photographing device disclosed in JP S58-153957A, are examples of optically useful items that that may be considered for use with the present invention, however the present invention is not limited to these.

When the casting or film coating process is complete, the polar organic solvent is removed from the polyamic acid solution, and the polyamic acid is chemically or thermally converted to make polyimide.

In a preferable embodiment, 20 to 25 wt% polyamic acid solution that has a viscosity in a range of about 5 to 2500 poise is cast to a specified thickness onto a glass plate or a stainless steel plate or the like. Removal of the polar solvent and conversion of the polyamic acid to imide is then performed sequentially or simultaneously. In a more preferable embodiment, the polyamic acid solution is cast on the surface of the object to be coated, and dried at a temperature of 80 to 120˚C for 30 to 120 min to form a film. Next, the temperature is raised to 200˚C, and maintained at this temperature for 10 to 180 min. The temperature is then raised to 250 to 300˚C, and maintained at this temperature for 30 to 120 min to convert the film to imide to form a polyimide film.

Alternatively, the imide may be cyclized by a method for chemically converting imides. In a preferable embodiment, acetic anhydride and a third amine are used as a cyclizing catalyst. In a more preferable embodiment, strong acids such as methane sulfonic acid are used as a catalyst, and the azeotropic water is removed by a cosolvent such as toluene.

In one more favorable embodiment, the polyamic acid solution of the present invention is spread as a coating onto optic fibers. Particularly, optic fibers are passed through a coating device, and 20 to 25 wt% polyamic acid solution having a viscosity in a range of about 5 to 25 poise is coated over the length of the fibers. After this, removal of the polar catalyst and imide conversion of the polyamic acid is performed preferably by passing the coated optic fibers through the 120˚C to 300˚C zone of an oven at a speed of 0.3 meters / min (m/min) to 9.3 to 12.4 m/min.

The imide film or coating film that is obtained is essentially colorless and transparent. In a preferable embodiment, when the film or coating film has a thickness of 50 $\pm$ 10 micrometers (μm) and is irradiated with light of 420 nanometers (nm), the film or coating film shows a transmittance of at least 50%.

Furthermore, the glass transition temperature (Tg) of a favorable polyimide coating film of the present invention is 200˚C or more, and more preferably, is 250˚C or more.

The water absorption of a favorable polyimide coating film of the present invention is 2.0% or less.

At least one layer of a transparent film may be further formed on at least one side of the polyimide coating film.

This is in order to increase adhesion with a transparent, electrically conductive film described below, without loss of transparency. Transparent thin films such as aluminium oxide, silicon oxide, silicon nitride, silicon oxide nitride, tantalum oxide and diamond-like carbon are examples of the transparent film. The transparent films may be used in a mono-layer or a multilayer. It is preferable that the film thickness is in a range of 50 nm to 5 μm. These transparent films can be formed by, for example, vacuum vapor deposition, sputtering, ion plating or plasma CVD.

At least one layer of a transparent, electrically conductive film may be formed on at least one side of the polyimide coating film, or the transparent film. The electric resistance of the transparent, electrically conductive film preferably is $1 \times 10^{-2}$ Ω·cm or less. An alloy of indium-tin oxide or the like is an example of a transparent, electrically conductive film, and it is preferable that the film thickness has a range of 50 nm to 1 μm. The electrically conductive film may be formed by, for example, vacuum vapor deposition, sputtering, ion plating or plasma CVD. The transparency, heat resistivity and conductivity may be increased by heating (annealing) the film for a relatively short time at a high temperature of not less than 170˚C. Annealing is possible since the polyimide coating film of the present invention has a high Tg.

*Working Examples*

The various properties of polyimide films fabricated in the working examples and comparative examples were measured by the measuring methods described below.

(1) Measurement of light transmittance

The transmittance of 420 nm light was measured using a spectrophotometer UV-2550 manufactured by Shimadzu Corporation.

(2) Measurement of water absorption

The polyimide films were heated to 150˚C and dried for 30 min in accordance with ASTM D570. Their weight (A) was measured, after which they were soaked for 24 hours in pure water, removed, weighed again (B), and their water absorption determined by the following formula.

$$\text{water absorption ratio (\%)} = [(B - A) / A] \times 100$$

(3) X-ray photoelectron spectroscopy (XPS)

The polyimide surfaces were XPS analyzed using an X-ray photoelectron spectroscopic analyzer XPS-700 manufactured by Rigaku. Assuming that bonding peaks are Gaussian, the fundamental spectrum of the 1s orbital (O1s) of the oxygen as obtained by XPS analysis was wave form separated and the degree of conversion to imide assessed.

(4) Glass transition temperature

The glass transition temperatures were measured using a dynamic visco-elastic apparatus DM 6100 manufactured by Seiko Instruments to apply a sinusoidal load having an amplitude of 98 mN and a frequency of 1.0 Hz to a polyimide film of a height of 8 mm and a width of 30 mm, in order to determine the stored elasticity and loss energy in a process in which the temperature is increased at 2˚C/min.

(5) Polyimide film thickness

The film thickness was measured using a crystal vibrating film controller CRTM-6000 manufactured by Nippon Vacuum Technology Co.

(6) Electrical resistivity

Electrical resistivity was measured by a 4 probe method in compliance with JIS K 7194.

(7) Adhesive test

Using a Sebastian V tester manufactured by Quad Group, the adhesion was measured using an aluminum stud pin with epoxy resin adhesive, and a ceramic backing plate with epoxy resin adhesive.

(8) Measurement of toughness

A test whereby the film was folded by hand and a fingernail run along the fold to make a firm crease, after which the film was opened up and made flat, and then again folded and firmly creased with a fingernail, was repeated 10 times. Films in which cracks formed, or in which the films were broken in this test were designate failures (F), and ones in which these did not occur, passed (P).

(9) Analysis of transparent, electrically conductive thin films

X-ray photoelectron spectroscopy (XPS)

The surfaces of the transparent electrically conductive thin film formed on the polyimide surfaces were XPS analyzed using an X-ray photoelectron spectroscopic analyzer XPS-700 manufactured by Rigaku.

Thin film X-ray diffraction (XRD)

The surfaces of the transparent electrically conductive thin films formed on the polyimide surfaces were XRD analyzed using a thin film X-ray diffractor manufactured by Rigaku.

(10) Film thickness of the transparent, electrically conductive thin film.

The film thickness of the transparent, electrically conductive thin films was determined using a crystal vibrating film controller CRTM-6000 manufactured by Nippon Vacuum Technology Co.

*Working Example 1*

(a) Synthesizing the polyimide precursor (polyamic acid) liquid.

An agitator on which a polytetrafluoroethylene agitating impeller is attached, and a nitrogen gas insertion pipe were attached to a 500 ml three-necked flask to make a polymerization vessel, and all reactions were performed under a nitrogen atmosphere. 33.565 g (0.135 mol) of 4,4'-diaminodiphenylsulfone (44DDS) that is sold by Wakayama Seika Kogyo Co. Ltd. under the trade name "Seika Cure S" was dosed as a diamine component with 216.0 g of N,N-dimethylacetamide (DMAC) that is sold by Mitsubishi Gas Chemical Corporation as a polymerization solvent, such that the solids portion in the polyimide precursor liquid was 28%. After the 44DDS was completely dissolved in the DMAC, 28.69 g (0.0976 mol) of biphenyl tetracarboxylic dianhydride (BPDA) that is sold by Mitsubishi Chemical Corporation under the trade name "BPDA), and 21.747 g (0.0418 mol) of 2,2-bis[4-(dicarboxyphenoxy) phenyl]propane dianhydride (BPADA) that is sold under the trade name "BPADA" by the Shanghai City Synthetic Resin Research Institute were dosed as is as a solid over 5 minutes as bifunctional acid anhydrides at a molar ratio that is 1.03 times the diamine component. After reacting for 1 hour at room temperature and reacting for 12 hours at 40˚C, a viscous polyimide precursor liquid having a viscosity of 205 poise was obtained. Next, 36.0 g of propylene carbonate made by Huntsman LLC was dosed such that when the solids percentage of the polyimide precursor liquid was 100 mass parts, cyclic compounds made up 43 mass parts. As shown in FIG. 1, the "BPADA" has a melting point endothermic peak temperature at 189.96˚C as measured by a differential scanning calorimeter (DSC), and is substantially neither endothermic nor exothermic below the melting point onset endothermic temperature (187.26˚C). This means that impurities that have a detrimental effect on transparency in the low temperature region are exceedingly scarce or are non-existent.

(b) Manufacturing the polyimide film

The polyimide precursor liquid was placed in a desiccator and held at a pressure of $1.33 \times 10^3$ Pa (10 mmHg) for 1 hour to remove gas from the solution. The solution from which the gas was removed was then cast onto a glass plate that had been coated with a delaminating film, and the thickness of the cast film in the width direction made uniform via a falling bar that has an adjustment gap. After this, the glass plate that was cast was placed in an oven at 80˚C for 45 min, then at 120˚C for 30 min, then 150˚C for 30 min and after that at 300˚C for 30 min to bring about the imide

conversion reaction and to cure the film. The glass plate was then removed from the oven, cooled to room temperature, and the film was separated from the glass plate. The light transmittance and water absorption ratio of the polyimide film then were measured. The glass transition temperature was found to be 304˚C.

*Working Examples 2 to 6*

Apart from dosing the cyclic compounds noted in Table 3 at the mass parts noted in Table 1, the polyimide precursor liquids and the polyimide films were fabricated in the same way as in Working Example 1, and the light transmittance and water absorption of the polyimide films were measured. The glass transition temperature of all the polyimide films was found to be 304˚C.

*Comparative Examples 1 to 8*

Apart from dosing the cyclic compounds noted in Table 4 at the mass parts noted in Table 1, the polyimide precursor liquids and the polyimide films were fabricated in the same way as in Working Example 1, and the light transmittance and water absorption ratio of the polyimide films were measured.

The above-noted conditions and results are summarized in Table 1 and 2. Table 3 shows the structure of the additives in Working Examples 1 to 6 of the present invention, and Table 4 shows the structure of the additives in Comparative Examples 1 to 8.

Table 1

| | Additive | Additive (mass parts) | BP (˚C) | SG |
|---|---|---|---|---|
| Working Example 1 | Propylene Carbonate | 43 | 242 | 1.21 |
| Working Example 2 | Propylene Carbonate | 214 | 242 | 1.21 |
| Working Example 3 | Ethylene Carbonate | 43 | 238 | 1.32 |
| Working Example 4 | Ethylene Carbonate | 214 | 238 | 1.32 |
| Working Example 5 | γ-butyrolactone | 43 | 204 | 1.13 |
| Working Example 6 | γ-butyrolactone | 214 | 204 | 1.13 |
| Comparative Example 1 | DMAC (polymerization solvent) | 43 | 164 | 0.94 |
| Comparative Example 2 | NMP | 43 | 202 | 1.03 |
| Comparative Example 3 | DMSO | 43 | 189 | 1.10 |
| Comparative Example 4 | diglyme | 43 | 162 | 0.95 |
| Comparative Example 5 | butyl cellosolve | 43 | 171 | 0.90 |
| Comparative Example 6 | tetrahydrofuran | 43 | 66 | 0.89 |
| Comparative Example 7 | cyclopentanone | 43 | 131 | 0.95 |
| Comparative Example 8 | sulfolane | 43 | 285 | 1.26 |

Table 2

| | Dielectric constant | Dipole moment (debye) | Film thickness (μm) | Light transmittance (%) | Water Absorption (%) |
|---|---|---|---|---|---|
| Working Example 1 | 66.1 | 4.9 | 52 | 76.9 | 1.9 |
| Working Example 2 | 66.1 | 4.9 | 52 | 76.6 | 1.9 |
| Working Example 3 | 89.8 | 4.9 | 51 | 73.5 | 1.8 |

(continued)

| | Dielectric constant | Dipole moment (debye) | Film thickness (μm) | Light transmittance (%) | Water Absorption (%) |
|---|---|---|---|---|---|
| Working Example 4 | 89.8 | 4.9 | 49 | 74.3 | 1.8 |
| Working Example 5 | 39.0 | 4.3 | 48 | 72.8 | 1.7 |
| Working Example 6 | 39.0 | 4.3 | 54 | 75.2 | 1.8 |
| Comparative Example 1 | 38.9 | 3.7 | 53 | 67.0 | 2.4 |
| Comparative Example 2 | 32.6 | 4.1 | 51 | 58.8 | 2.3 |
| Comparative Example 3 | 46.7 | 3.9 | 51 | 48.7 | 2.5 |
| Comparative Example 4 | 7.2 | 2.0 | 49 | 67.9 | 2.3 |
| Comparative Example 5 | 9.4 | 2.1 | 52 | 62.5 | 2.2 |
| Comparative Example 6 | 7.5 | 1.8 | 55 | 66.3 | 2.4 |
| Comparative Example 7 | 14.0 | 3.3 | 46 | 55.9 | 2.3 |
| Comparative Example 8 | 43.3 | 4.8 | 48 | 57.0 | 1.8 |
| Remarks: The value of the mass parts of the additives indicates the mass parts of the additives when the polyimide precursor (solid portion) is 100 mass parts. | | | | | |

Table 3

| Structural formulae of the additives of Working Examples 1 to 6 | |
|---|---|
| Propylene carbonate | 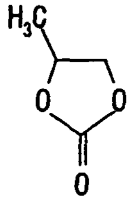 |
| γ-butyrolactone | 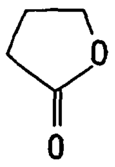 |
| Ethylene carbonate | 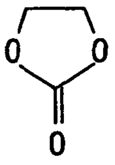 |

Table 4

| Structural formalae of the additives of Comparative Examples 1 to 8 | | | |
|---|---|---|---|
| DMAC | 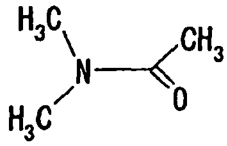 | Diglyme | 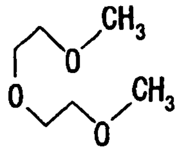 |
| NMP | 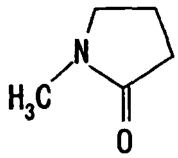 | Butyl cellosolve | 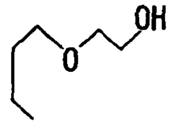 |
| DMSO | 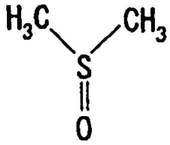 | Tetrahydrofuran | 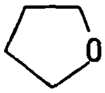 |
| Sulfolane | 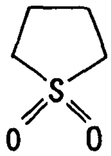 | Cyclopentanone | 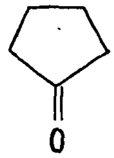 |

As has been made clear by the results above, for the Working Examples 1 to 6 of the present invention, it is not just the glass transition temperature that is high, but the light transmittance and transparency is higher, and from the results of XPS analysis, the degree to which conversion to imide has proceeded is greater than in Comparative Examples (conventional art) 1 to 8, and thus it is possible to make a polyimide coating film having low water absorption.

*Working Example 7*

(1) Aromatic diamine

4-4 DDS that is the para-form of the above-noted Chemical Formula 1: 4,4'-diaminodiphenyl sulfone, sold under the trade name "Seika cure S" by Wakayama Seika Kogyo Co. Ltd., was used as the aromatic diamine.

(2) Alicyclic diamine

NBDA: norbornanediamine, sold under the trade name "NBDA" by Mitsui Chemicals Inc. was used as the alicyclic diamine.

(3) Bifunctional acid anhydride

BPDA of the above-noted Chemical Formula A: biphenyl tetracarboxylic dianhydride monomer, sold under the trade name "BPDA" by Mitsubishi Chemical Corporation, and 2,2-bis[4-(dicarboxyphenoxy)phenyllpropane dianhydride (BPADA), of the above-noted Chemical Formula B: sold under the trade name "BPADA" by the Shanghai City Synthetic Resin Research Institute were used as bifunctional acid anhydrides.

(4) Polar organic solvent

DMAC: N,N-dimethylacetamide, sold by Mitsubishi Gas Chemical Corporation was used as the polar organic solvent.

(5) Lactone compound

γ-butyrolactone made by Mitsubishi Chemical Corporation was used as the lactone compound.

(6) Alternative diluting solvents for dilution

Tetrahydrofuran and butyl cellosolve made by Wako Pure Chemical Industries, Ltd, and isophorone made by Daicel Chemical Industries, Ltd were used.

(7) Methods for manufacturing and testing samples

(a) Synthesis of the polyamic acid (polyimide precursor) solution

A fixed amount of diamine monomer and DMAC solvent were added to a reaction vessel, stirred under a nitrogen gas atmosphere until the diamine monomer was completely dissolved in the DMAC solvent, and refluxed at 40˚C. A fixed amount of bifunctional acid anhydride was then added to the reaction vessel to generate a polyamic acid solution. The molar ratio of the bifunctional acid anhydride component to the diamine monomer component, both of which were used to manufacture the polyamic acid solution, was 1.03 / 1.0. The mixing ratio of solvent to polyamic acid solids was set such that the solids portion was 28 mass%. A predetermined amount of γ-butyrolactone was added after the polymerization reaction was complete. Where the solid portion of the polyimide precursor liquid was 100 mass parts, the polar polymerization solvent was added up to 257 mass parts, and the additives such as γ-butyrolactone were added as noted in Tables 5 and 6.

(b) Manufacturing the polyimide film

The polyamic acid solution was placed in a dessicator and held at a pressure of 10 mmHg for 1 hour to remove gas from the solution. The solution from which the gas was removed was then cast onto a glass plate that was coated with a delaminating film, and the thickness of the cast film in the width direction made uniform via a falling bar that has an adjustment gap. After this, the glass plate that was cast was placed in an oven at 80˚C for 45 min, then at 120˚C for 30 min, then 150˚C for 30 min and after that at 300˚C for 30 min to bring on the imide conversion reaction and to cure the film. Then, the glass plate was removed from the oven, cooled to room temperature and the film separated from the glass plate. The light transmittance and water absorption ratio of the polyimide film then were measured. These results are shown in Table 5 and 6.

*Working Examples 8 to 15*

Apart from changing the molar ratio of the diamine or the bifunctional acid anhydride as noted in Tables 5 and 6, the polyimide precursor liquids and polyimide films were fabricated in the same way as in Working Example 7, and the light transmittance, toughness and glass transition temperature of the polyimide films were measured. Those results are noted in Tables 5 and 6.

*Working Example 16*

Apart from changing the diamine to 4,4-DDA / NBDA at the mole ratios noted in Tables 5 and 6, and changing the bifunctional acid anhydride to BPDA only, the polyimide precursor liquid and the polyimide film were fabricated in the same way as in Working Example 7, and the light transmittance, toughness and glass transition temperatures were measured. These results are noted in Tables 5 and 6.

*Working Example 17*

(a) Synthesis of the polyimide precursor (polyamic acid) liquid

An agitator on which a polytetrafluoroethylene agitating impeller is attached, and a nitrogen gas insertion pipe were attached to a 500 ml three-necked flask to make a polymerization vessel, and all reactions were performed under a nitrogen atmosphere. 28.317 g (0.184 mol) of NBDA was added as the diamine component, and 216.0 g of DMAC was added as the polymerization solvent, such that the solids composition of the polyimide precursor liquid was 28 mass%. After stirring thoroughly, 55.683 g (0.189 mol) of BPDA was dosed as is in solid form over 5 min as the bifunctional acid anhydride at 1.03 times the molar ratio with respect to the diamine. 15 minutes later, the reaction solution had

turned to a yoghurt-type consistency. The reaction temperature then rose rapidly to about 60˚C, and the solution changed from a yoghurt-type consistency to a viscous liquid. The precursor liquid was obtained by further reacting for 12 hours at 40˚C. Next, 36.0 g of γ-butyrolactone was added such that when the solids portion of the polyimide precursor liquid was set to 100 mass parts, the cyclic compound was 43 mass parts. The polyimide film was fabricated in the same way as Working Example 7, and the light transmittance, toughness and glass transition temperature of the polyimide film were measured. The results are shown in Tables 5 and 6.

Table 5

| | Monomer | | Additive (mass parts) |
|---|---|---|---|
| | Acid anhydride component (molar ratio) | Diamine component (molar ratio) | |
| Working Example 7 | 4,4-DDS(100) | BPDA/BPADA(90/10) | γ-butyrolactone (214) |
| Working Example 8 | 4,4-DDS(100) | BPDA/BPADA(80/20) | γ-butyrolactone (214) |
| Working Example 9 | 4,4-DDS(100) | BPDA7BPADA(70/30) | γ-butyrolactone (214) |
| Working Example 10 | 4,4-DDS(100) | BPDA/BPADA(60/40) | γ-butyrolactone (214) |
| Working Example 11 | 4,4-DDS(100) | BPDA/BPADA(50/50) | γ-butyrolactone (214) |
| Working Example 12 | 4,4-DDS(100) | BPDA/BPADA(70/30) | γ-butyrolactone (43) |
| Working Example 13 | 4,4-DDS(100) | BPDA/BPADA(70/30) | γ-butyrolactone (143) |
| Working Example 14 | 4,4-DDS(100) | BPDA/BPADA(70/30) | γ-butyrolactone (214) |
| Working Example 15 | 3,3-DDS(100) | BPDA/BPADA(75/25) | γ-butyrolactone (42) |
| Working Example 16 | 4,4-DDS/NBDA (70/30) | BPDA(100) | γ-butyrolactone (43) |
| Working Example 17 | NBDA(100) | BPDA(100) | γ-butyrolactone (43) |
| Comparative Example 9 | 4,4-DDS(100) | BPDA/BPADA(90/10) | - |
| Comparative Example 10 | 4,4-DDS(100) | BPDA/BPADA(80/20) | - |
| Comparative Example 11 | 4,4-DDS(100) | BPDA/BPADA(70/30) | - |
| Comparative Example 12 | 4,4-DDS(100) | BPDA/BPADA(60/40) | - |
| Comparative Example 13 | 4,4-DDS(100) | BPDA/BPADA(50/50) | - |
| Comparative Example 14 | 4,4-DDS(100) | BPDA/BPADA(70/30) | Tetrahydrofuran (214) |
| Comparative Example 15 | 4,4-DDS(100) | BPDA/BPADA(70/30) | Butyl cellosolve (214) |
| Comparative Example 16 | 4,4-DDS(100) | BPDA/BPADA(70/30) | Isophorone (214) |
| Comparative Example 17 | 3,3-DDS(100) | BPDA/BPADA(75/25) | - |
| Comparative Example 18 | 4,4-DDS/NBDA (70/30) | BPDA(100) | - |
| Comparative Example 19 | NBDA(100) | BPDA(100) | - |
| Remarks: The values within the brackets in the Additives column indicate the number of mass parts of the additive when the polyimide precursor (solids portion) is 100 mass parts. | | | |

Table 6

| | Film Thickness (μm) | Light transmittance (%) | Toughness | Glass transition temperature (˚C) |
|---|---|---|---|---|
| Working Example 7 | 52 | 73.2 | P | 338 |
| Working Example 8 | 49 | 72.4 | P | 316 |
| Working Example 9 | 53 | 76.3 | P | 304 |
| Working Example 10 | 51 | 74.7 | P | 287 |

(continued)

| | Film Thickness ($\mu$m) | Light transmittance (%) | Toughness | Glass transition temperature (°C) |
|---|---|---|---|---|
| Working Example 11 | 48 | 73.5 | P | 270 |
| Working Example 12 | 48 | 72.8 | P | 304 |
| Working Example 13 | 54 | 75.2 | P | 304 |
| Working Example 14 | 56 | 71.9 | P | 304 |
| Working Example 15 | 49 | 76.7 | P | 250 |
| Working Example 16 | 51 | 68.7 | P | 315 |
| Working Example 17 | 52 | 66.4 | P | 239 |
| Comparative Example 9 | 52 | 67.8 | P | 338 |
| Comparative Example 10 | 49 | 68.7 | P | 316 |
| Comparative Example 11 | 53 | 67.0 | P | 304 |
| Comparative Example 12 | 51 | 66.1 | P | 287 |
| Comparative Example 13 | 48 | 69.8 | P | 270 |
| Comparative Example 14 | 57 | 65.8 | P | 304 |
| Comparative Example 15 | 53 | 62.7 | P | 304 |
| Comparative Example 16 | 57 | 0.2 | F | - |
| Comparative Example 17 | 50 | 72.5 | P | 250 |
| Comparative Example 18 | 48 | 67.7 | P | 315 |
| Comparative Example 19 | 52 | 65.8 | P | 239 |

In Tables 5 and 6, the results of Working Examples 1 to 8 are within the range of the present invention, and thus transparency and toughness were high. In comparison, since lactone compounds were not added to comparative examples 9 to 19, their transparency was lower than that of the products of the working examples

*Working Example 18*

Indium oxide that had been doped to 5 mass% with tin was provided on the sputtering electrode of a high frequency (RF) magnetron sputtering device, and a polyimide film having a thickness of 75 $\mu$m that was fabricated from the polyimide precursor liquid of Working Example 1 was set on the substrate side at a position 100 mm from the target. An oil-sealed rotary vacuum pump was used to roughly lower the pressure, and an oil diffusion pump was used further to bring the vacuum to $2.0 \times 10^{-4}$ Torr. Argon gas was allowed to flow in at 97 sccm, and oxygen gas was allowed to flow in at 3 sccm to maintain a vacuum of $1.0 \times 10^{-2}$ Torr. Next, a transparent, electrically conductive thin film made from indium tin oxide (ITO) was formed to a thickness of 300 nm by sputtering for about 30 min at an RF traveling wave of 250 W, and an RF reflective wave of 0W, and a transparent, electrically conductive film was obtained by annealing in atmosphere at 200°C.

The transmittance of light of 380 nm to 780 nm through this transparent electrically conductive thin film was

80% or greater. Furthermore, no delamination of the thin film was observed in a test of the adhesion of the transparent, electrically conductive thin film. The electric resistance of the transparent, electrically conductive film was $1.7 \times 10^{-4}$ Ω·cm.

*Working Example 19*

A silicon target was provided on the sputtering electrode of a high frequency (RF) magnetron sputtering device, and a polyimide film having a thickness of 50 μm that was fabricated from the polyimide precursor liquid of Working Example 1 was set on the substrate side in a position 100 mm from the target. An oil-sealed rotary vacuum pump was used to roughly lower the pressure, and an oil diffusion pump was used further to bring the vacuum to $2.0 \times 10^{-4}$ Torr. Nitrogen gas was allowed to flow in at 40 sccm and argon gas was allowed to flow in at 60 sccm to maintain a vacuum of $1.0 \times 10^{-2}$ Torr. Next, a transparent film made of silicon oxide nitride ($SiO_{0.90}N_{0.58}$) was formed on the polyimide film to a thickness of 110 nm by sputtering for about 30 min at an RF traveling wave of 400 W, and an RF reflective wave of 0W. The $SiO_{0.90}N_{0.58}$ was confirmed by XPS and XRD analysis. Even with forming the transparent film of silicon oxide nitride, the transmittance was 76.9% and was not substantially different from Working Example 1.

Next, a transparent, electrically conductive thin film was formed on the transparent silicon oxide nitride film in the same manner as in Working Example 18.

The transmittance of light of 380 nm to 780 nm through this transparent electrically conductive thin film was 80% or greater. Furthermore, no delamination of the thin film was observed in a test of the adhesion of the transparent, electrically conductive thin film. The electric resistance of the transparent, electrically conductive film was $1.7 \times 10^{-4}$ Ω·cm.

**Claims**

**1.** A polyimide precursor liquid composition, comprising:

at least one type of tetracarboxylic dianhydride or derivative thereof;
at least one type of diamine or derivative thereof; and
a polar polymerization solvent;

wherein the polyimide precursor liquid composition further includes a cyclic compound having a 5 member ring structure that includes a carbonyl group (C=O bond);
wherein the cyclic compound has a boiling point of 200°C or more and comprises carbon, hydrogen and oxygen atoms and does not include hetero atoms of nitrogen, phosphorous and sulfur; and
wherein the tetracarboxylic dianhydride or derivative thereof is at least one type of compound selected from the group consisting of the following chemical formulae A and B (where X represents - O -, - S -, - SO -, - $SO_2$ -, - $CH_2$ -, - $CF_2$ -, - $C(CH_3)_2$ -, - $C(CF_3)_2$ - or a direct bond);

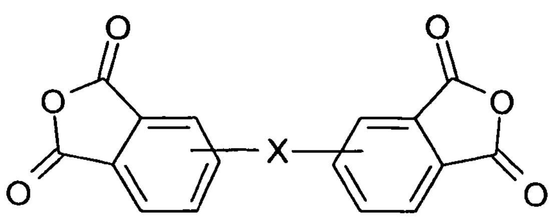

A

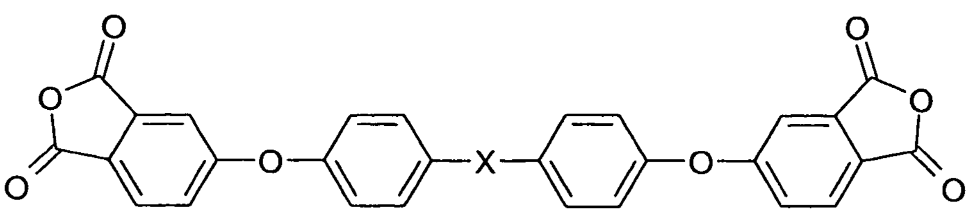

B.

2. The polyimide precursor liquid composition according to claim 1, wherein the diamine or derivative thereof is at least one type of compound selected from the group consisting of the following chemical formulae I and II (where Y represents - O -, - S -, - SO -, - $SO_2$ -, - $CH_2$ -, - $CF_2$ -, - $C(CH_3)_2$ -, - $C(CF_3)_2$ -, - CO - or a direct bond);

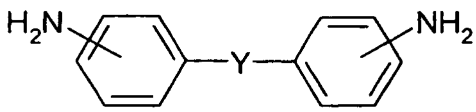

I

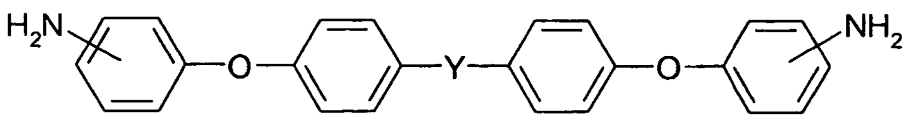

II

3. The polyimide precursor liquid composition according to claim 1, wherein the dielectric constant of the cyclic compound is not less than 30.

4. The polyimide precursor liquid composition according to claim 1 or 3, wherein the dipole moment of the cyclic compound is not less than 3 debye.

5. The polyimide precursor liquid composition according to claim 1, wherein the cyclic compound is at least one selected from the group consisting of ethylene carbonate, propylene carbonate, butylene carbonate, and γ-butyrolactone.

6. The polyimide precursor liquid composition according to claim 1, wherein when the solids portion of the polyimide precursor liquid is 100 mass parts, the polar polymerization solvent is in the range of 150 to 900 mass parts, and the cyclic compound is in the range of 15 to 750 mass parts.

7. The polyimide precursor liquid composition according to any one of claim 1 to 6, wherein the polyimide precursor is polymerized in the polar polymerization solvent, after which the cyclic compound is added.

8. A polyimide coating film that is obtained by converting the polyimide precursor liquid composition according to any one of claims 1 to 7 into an imide.

9. The polyimide coating film according to claim 8, wherein when the polyimide coating film is a coating film that has a thickness of 50 ± 10 micrometers (μm) and is irradiated with light of 420 nanometers (nm), the polyimide coating film shows a transmittance of 50% or more.

10. The polyimide coating film according to claim 8, wherein the glass transition temperature (Tg) of the polyimide coating film is 200˚C or more.

11. The polyimide coating film according to claim 8, wherein the water absorption of the polyimide coating film is 2.0% or less.

12. The polyimide coating film according to claim 8, wherein at least a single layer of a transparent film further is formed on at least one side of the polyimide coating film.

13. The polyimide coating film according to claim 8 or 12, wherein at least a single layer of a transparent, electrically conductive film is further formed on at least one side of the polyimide coating film or the transparent film.

**14.** The polyimide coating film according to claim 13, wherein the electric resistance of the transparent, electrically conductive film is $1 \times 10^{-2}$ Ω.cm or less.

## Patentansprüche

**1.** Flüssige Polyimidvorläufer-Zusammensetzung, umfassend:

wenigstens einen Typ von Tetracarbonsäuredianhydrid oder ein Derivat davon;
wenigstens einen Typ eines Diamins oder eines Derivates davon und
ein polares Polymerisationslösemittel;

worin die flüssige Polyimidvorläufer-Zusammensetzung des Weiteren eine cyclische Verbindung mit einer 5-Ringstruktur umfasst, die eine Carbonylgruppe (C=O-Bindung) beinhaltet;
worin die cyclische Verbindung einen Siedepunkt von 200˚C oder mehr aufweist und Kohlenstoff-, Wasserstoff- und Sauerstoffatome umfasst und keine Heteroatome von Stickstoff, Phosphor und Schwefel beinhaltet; und
worin das Tetracarbonsäuredianhydrid oder ein Derivat davon wenigstens ein Typ von Verbindung ist, ausgewählt aus der Gruppe, bestehend aus den folgenden chemischen Formeln A und B (worin X die Bedeutung - O -, - S -, - SO -, - $SO_2$ -, - $CH_2$ -, - $CF_2$ -, - $C(CH_3)_2$ -, - C $(CF_3)_2$ - oder einer direkten Bindung hat);

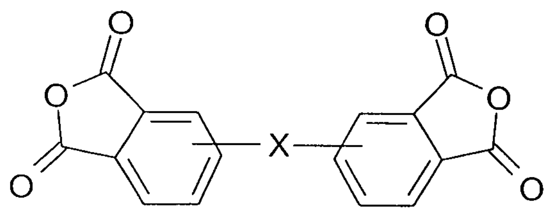

A

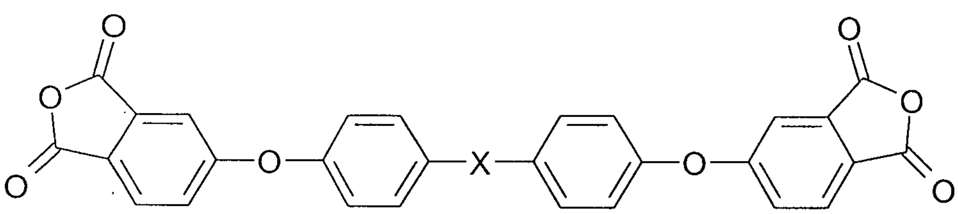

B.

**2.** Flüssige Polyimidvorläufer-Zusammensetzung gemäß Anspruch 1, worin das Diamin oder ein Derivat davon wenigstens ein Typ von Verbindung ist, ausgewählt aus der Gruppe, bestehend aus den folgenden chemischen Formeln I und II (worin Y die Bedeutung - O -, - S -, - SO -, - $SO_2$ -, - $CH_2$ -, - $CF_2$ -, -$C(CH_3)_2$ -, - $C(CF_3)_2$ -, - CO - oder einer direkten Bindung hat);

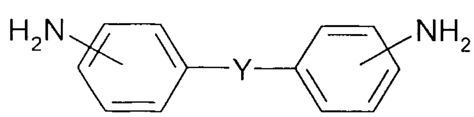

I

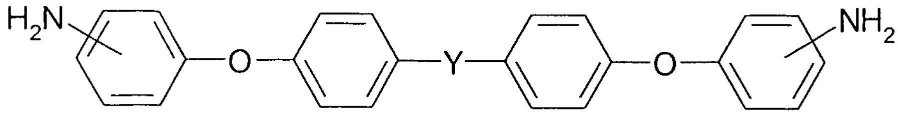

II

3. Flüssige Polyimidvorläufer-Zusammensetzung gemäß Anspruch 1, worin die dielektrische Konstante der cyclischen Verbindung weniger als 30 beträgt.

4. Flüssige Polyimidvorläufer-Zusammensetzung gemäß Anspruch 1 oder 3, worin das Dipolmoment der cyclischen Verbindung weniger als 3 Debye beträgt.

5. Flüssige Polyimidvorläufer-Zusammensetzung gemäß Anspruch 1, worin die cyclische Verbindung wenigstens eine ist, die aus der Gruppe, bestehend aus Ethylencarbonat, Propylencarbonat, Butylencarbonat und γ-Butyrolacton besteht.

6. Flüssige Polyimidvorläufer-Zusammensetzung gemäß Anspruch 1, worin, wenn der Feststoffanteil des flüssigen Polyimidvorläufers 100 Gewichtsteile beträgt, das polare Polymerisierungsmittel im Bereich von 150 bis 900 Gewichtsteilen und die cyclische Verbindung im Bereich von 15 bis 750 Gewichtsteilen vorliegt.

7. Flüssige Polyimidvorläufer-Zusammensetzung gemäß einem jeden der Ansprüche 1 bis 6, worin der Polyimidvorläufer in dem polaren Polimerisationslösemittel polymerisiert wird, wonach die cyclische Verbindung zugegeben wird.

8. Ein Polyimidbeschichtungsfilm, erhalten durch Umwandlung der flüssigen Polyimidvorläufer-Zusammensetzung gemäß einem jeden der Ansprüche 1 bis 7 in ein Imid.

9. Polyimidbeschichtungsfilm nach Anspruch 8, worin, wenn der Polyimidbeschichtungsfilm ein Beschichtungsfilm mit einer Dicke von 50 ± 10 μm ist und mit Licht von 420 nm bestrahlt wird, der Polyimidbeschichtungsfilm eine Lichtdurchlässigkeit von 50% oder mehr besitzt.

10. Polyimidbeschichtungsfilm gemäß Anspruch 8, worin die Glasübergangstemperatur (Tg) des Polyimidbeschichtungsfilms 200˚C oder mehr beträgt.

11. Polyimidbeschichtungsfilm gemäß Anspruch 8, worin die Wasserabsorption des Polyimidbeschichtungsfilms 2,0% oder weniger beträgt.

12. Polyimidbeschichtungsfilm gemäß Anspruch 8, worin wenigstens eine Einzelschicht eines transparenten Films des Weiteren auf wenigstens einer Seite des Polyimidbeschichtungsfilms ausgebildet ist.

13. Polyimidbeschichtungsfilm gemäß Anspruch 8 oder 12, worin wenigstens eine Einzelschicht eines transparenten, elektrisch leitenden Films des Weiteren auf wenigstens einer Seite des Polyimidbeschichtungsfilms ausgebildet ist.

14. Polyimidbeschichtungsfilm gemäß Anspruch 13, worin der elektrische Widerstand des transparenten, elektrisch leitenden Films $1 \times 10^{-2}\ \Omega \cdot cm$ oder weniger beträgt.

**Revendications**

1. Composition liquide de précurseur de polyimide, comprenant:

au moins un type de dianhydride tétracarboxylique ou un dérivé de celui-ci;
au moins un type de diamine ou un dérivé de celle-ci ; et

un solvant de polymérisation polaire;

où la composition liquide de précurseur de polyimide inclut en outre un composé cyclique ayant une structure cyclique à 5 éléments qui inclut un groupe carbonyle (liaison C=O) ;
où le composé cyclique possède un point d'ébullition de 200°C ou plus et comprend des atomes de carbone, d'hydrogène et d'oxygène et n'inclut pas d'hétéroatomes d'azote, de phosphore et de soufre ; et
où le dianhydride tétracarboxylique ou un dérivé de celui-ci est au moins un type de composé choisi dans le groupe constitué des formules chimiques A et B suivantes (dans lesquelles X représente - O -, - S -, - SO -, - $SO_2$ -, - $CH_2$ -, - $CF_2$ -, - $C(CH_3)_2$ -, - $C(CF_3)_2$ - ou une liaison directe) ;

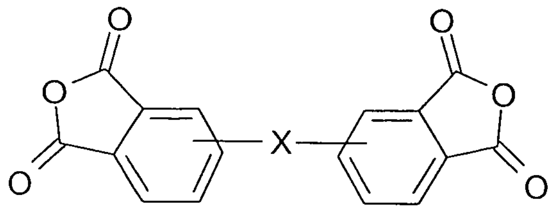

A

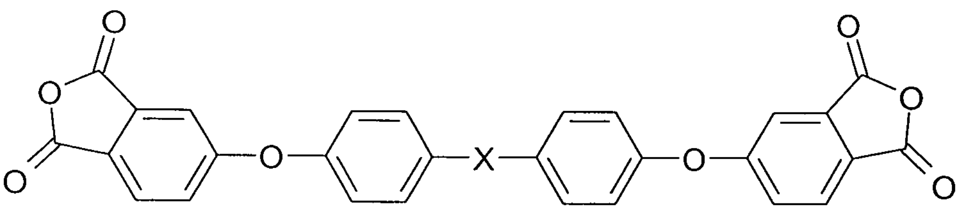

B.

2. Composition liquide de précurseur de polyimide selon la revendication 1,
dans laquelle la diamine ou un dérivé de celle-ci est au moins un type de composé choisi dans le groupe constitué des formules chimiques I et II suivantes (dans lesquelles Y représente - O -, - S -, - SO -, - $SO_2$ -, - $CH_2$ -, - $CF_2$ -, - $C(CH_3)_2$ -, - $C(CF_3)_2$ -, - CO - ou une liaison directe) ;

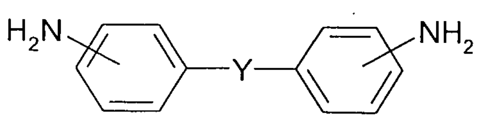

I

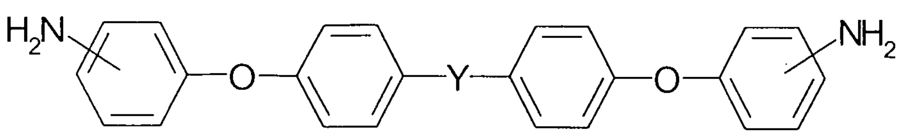

II

3. Composition liquide de précurseur de polyimide selon la revendication 1,
dans laquelle la constante diélectrique du composé cyclique n'est pas inférieure à 30.

4. Composition liquide de précurseur de polyimide selon la revendication 1 ou 3,

dans laquelle le moment dipolaire du composé cyclique n'est pas inférieur à 3 Debye.

**5.** Composition liquide de précurseur de polyimide selon la revendication 1, dans laquelle le composé cyclique est au moins l'un choisi dans le groupe constitué de carbonate d'éthylène, de carbonate de propylène, de carbonate de butylène, et de $\gamma$-butyrolactone.

**6.** Composition liquide de précurseur de polyimide selon la revendication 1, dans laquelle quand la portion de matières solides du liquide de précurseur de polyimide est de 100 parties en masse, le solvant de polymérisation polaire se trouve dans la gamme de 150 à 900 parties en masse, et le composé cyclique se trouve dans la gamme de 15 à 750 parties en masse.

**7.** Composition liquide de précurseur de polyimide selon l'une quelconque des revendications 1 à 6, dans laquelle le précurseur de polyimide est polymérisé dans le solvant de polymérisation polaire, après quoi le composé cyclique est ajouté.

**8.** Film de revêtement de polyimide qui est obtenu en convertissant la composition liquide de précurseur de polyimide selon l'une quelconque des revendications 1 à 7 en un imide.

**9.** Film de revêtement de polyimide selon la revendication 8, dans lequel quand le film de revêtement de polyimide est un film de revêtement qui possède une épaisseur de 50 $\pm$ 10 micromètres ($\mu$m) et est irradié avec une lumière de 420 nano- mètres (nm), le film de revêtement de polyimide présente une transmittance de 50 % ou plus.

**10.** Film de revêtement de polyimide selon la revendication 8, dans lequel la température de transition vitreuse (Tg) du film de revêtement de polyimide est de 200°C ou plus.

**11.** Film de revêtement de polyimide selon la revendication 8, dans lequel l'absorption d'eau du film de revêtement de polyimide est de 2,0 % ou moins.

**12.** Film de revêtement de polyimide selon la revendication 8, dans lequel au moins une seule couche du film transparent est en outre formée sur au moins une face du film de revêtement de polyimide.

**13.** Film de revêtement de polyimide selon la revendication 8 ou 12, dans lequel au moins une seule couche d'un film transparent et électriquement conducteur est en outre formée sur au moins une face du film de revêtement de polyimide ou du film transparent.

**14.** Film de revêtement de polyimide selon la revendication 13, dans lequel la résistance électrique du film transparent et électriquement conducteur est de $1 \times 10^{-2}\ \Omega \cdot cm$ ou moins.

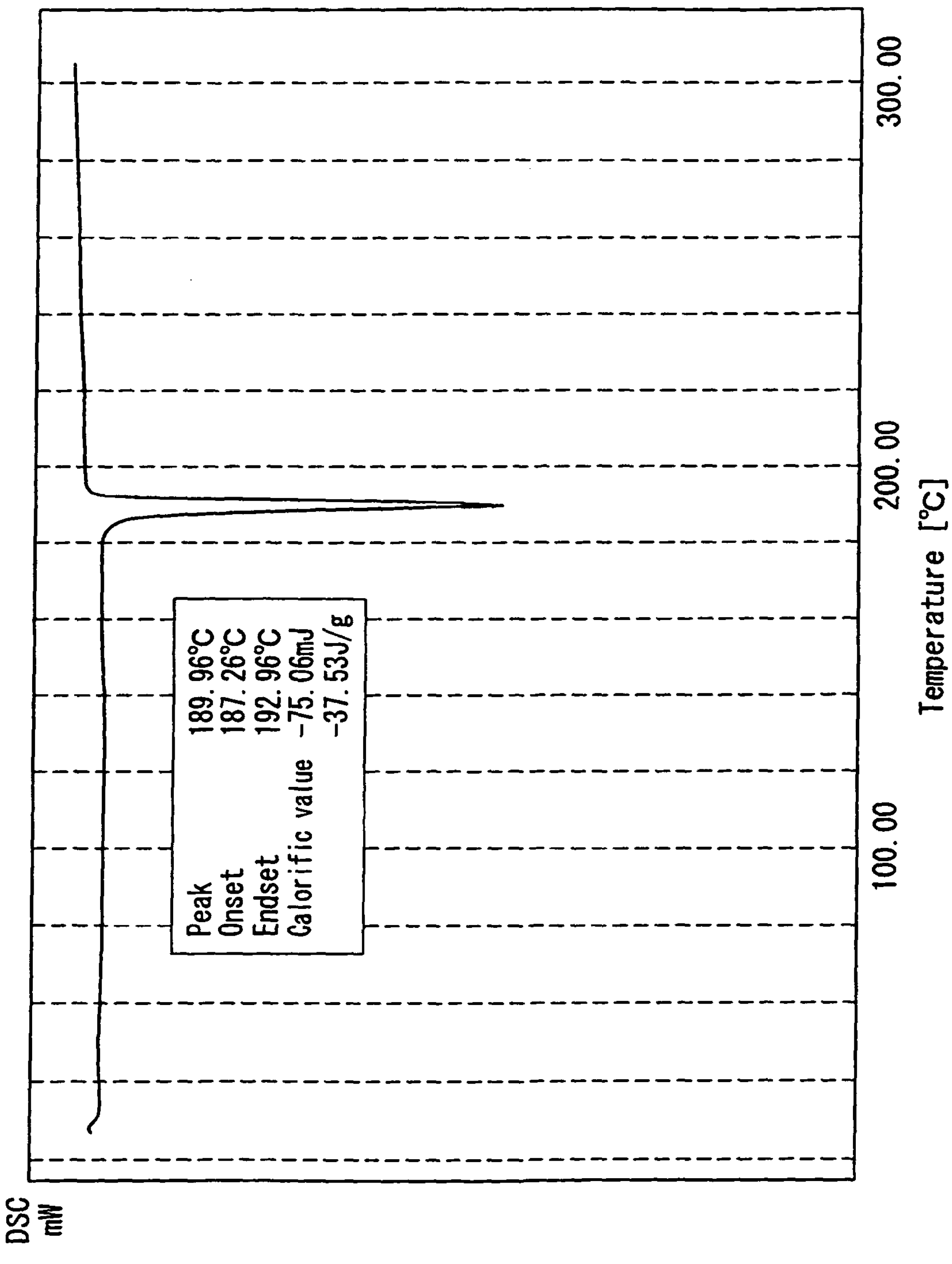
Peak 189.96°C
Onset 187.26°C
Endset 192.96°C
Calorific value -75.06mJ
-37.53J/g
100.00
200.00
300.00
Temperature [°C]
DSC
mW

FIG. 1

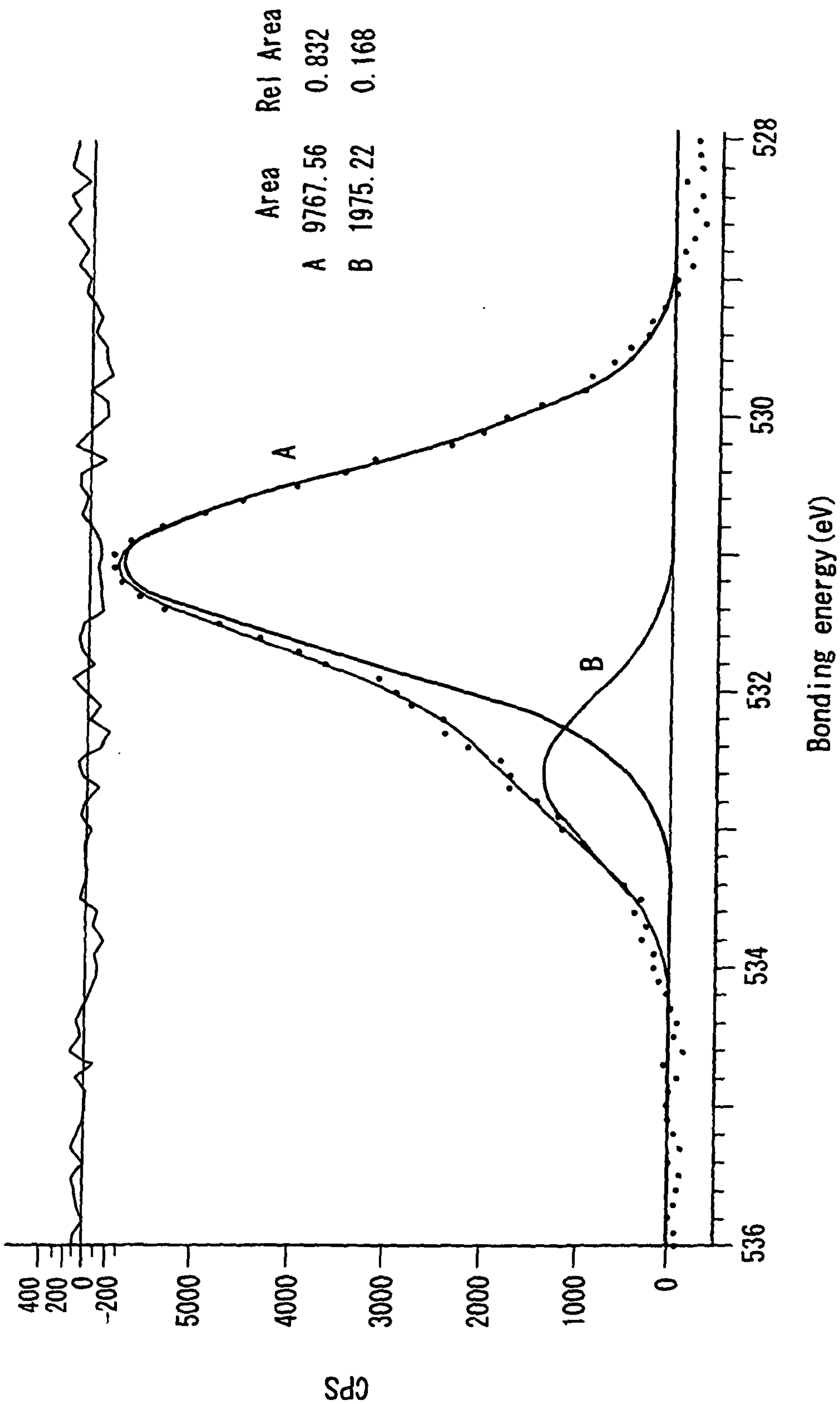
Area
Rel Area
A 9767.56 0.832
B 1975.22 0.168
A
B
CPS
400
200
0
-200
5000
4000
3000
2000
1000
0
536
534
532
530
528
Bonding energy (eV)

FIG. 2

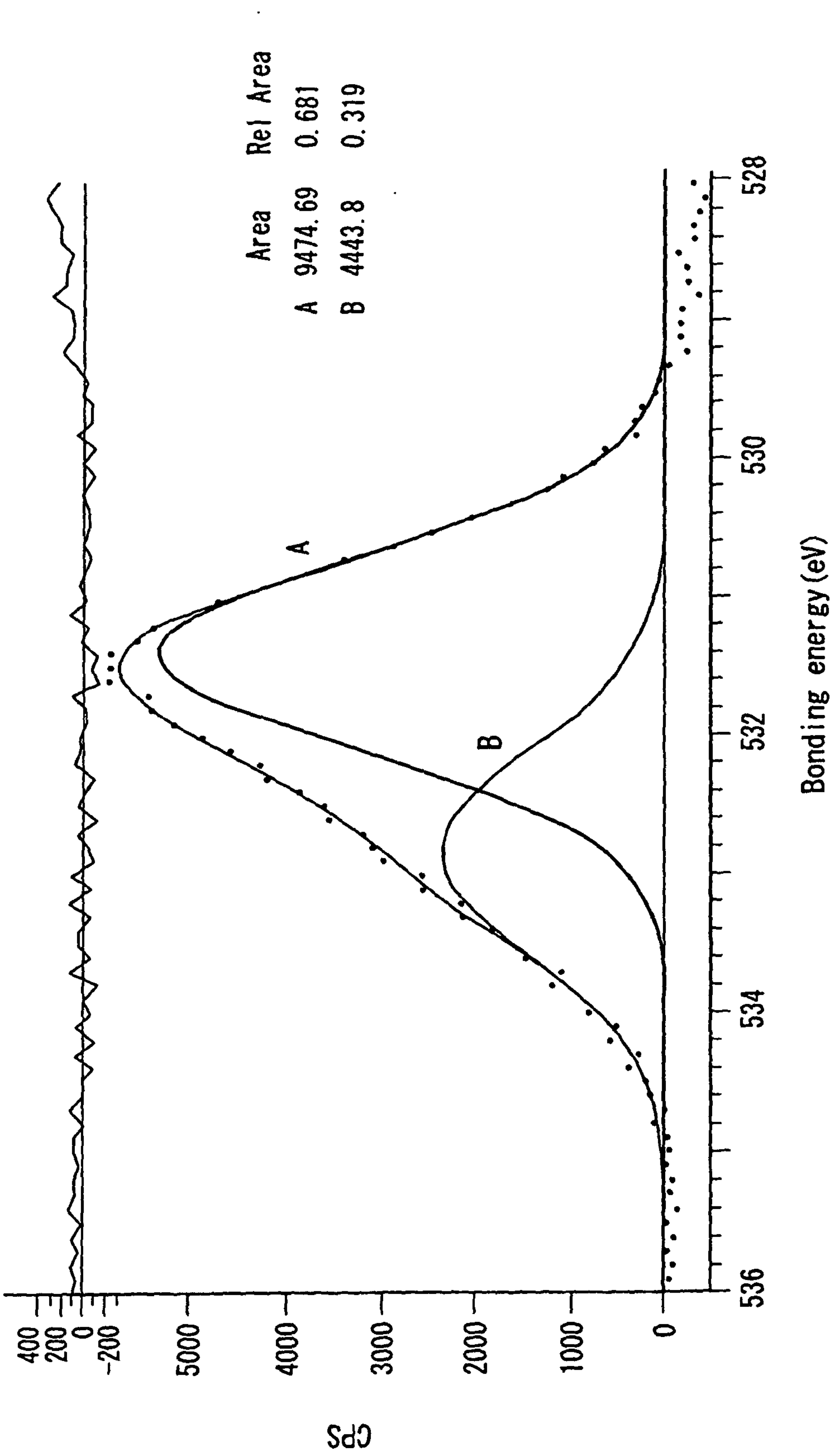
Area Rel Area
A 9474.69 0.681
B 4443.8 0.319
A
B
CPS
400
200
0
-200
5000
4000
3000
2000
1000
0
536
534
532
530
528
Bonding energy (eV)

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4876330 A
- JP 2000313804 A
- JP 6207014 B
- JP 2000305280 B
- JP 2000226517 B
- JP 2003005548 A
- JP S58153957 A